(19) Europäisches Patentamt
European Patent Office
Office européen des brevets

(11) **EP 1 717 284 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(51) Int Cl.:
*C09D 175/04* *(2006.01)*       *C08G 18/12* *(2006.01)*
*C08G 18/34* *(2006.01)*       *C08J 3/07* *(2006.01)*
*C08K 5/06* *(2006.01)*

(21) Anmeldenummer: **06007670.0**

(22) Anmeldetag: **12.04.2006**

(54) **Polyurethan-Dispersionen mit verbesserten Verfilmungseigenschaften**

Polyurethane dispersions having improved film forming properties

Dispersions de polyuréthanes avec propriétés améliorées de formation de film

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**HR**

(30) Priorität: **25.04.2005 DE 102005019397**

(43) Veröffentlichungstag der Anmeldung:
**02.11.2006 Patentblatt 2006/44**

(73) Patentinhaber: **Bayer MaterialScience AG**
**51368 Leverkusen (DE)**

(72) Erfinder:
• **Gertzmann, Rolf, Dr.**
**51377 Leverkusen (DE)**
• **Irle, Christoph, Dr.**
**08960 Sant Just Desvern (ES)**
• **Roschu, Rolf**
**08860 Castelldefels (ES)**

(56) Entgegenhaltungen:
DE-A1- 3 613 492           US-A- 4 552 908
US-A- 5 238 987           US-A1- 2003 187 136

• PATENT ABSTRACTS OF JAPAN Bd. 1995, Nr. 02, 31. März 1995 (1995-03-31) & JP 06 329744 A (SANYO CHEM IND LTD), 29. November 1994 (1994-11-29)

# EP 1 717 284 B1

**Beschreibung**

Die Erfindung betrifft ein Verfahren zur Herstellung lösemittelfreier, wässriger Polyurethan-Beschichtungsmittel und die so hergestellten Lacke mit verbesserten Filmbildungseigenschaften.

Mit dem Ziel die Emissionen organischer Lösemittel zu senken, werden zunehmend wässrige Beschichtungsmittel anstelle lösemittelhaltiger Systeme eingesetzt. Eine wichtige Klasse wässriger Lackbindemittel sind die bereits im Stand der Technik umfassend beschriebenen PolyurethanDispersionen. Prinzipiell ist es möglich nach dem Aceton- oder nach dem Prepolymermischverfahren lösemittelfreie Polyurethandispersionen (im folgenden PUD genannt) zu erhalten. Allerdings benötigen insbesondere PUD, die bei oder unter Raumtemperatur zu härteren Beschichtungen verfilmen sollen, ein Coaleszenzmittel, dass die Mindestfilmbildungstemperatur herabsetzt.

In vielen Anwendungen hat N-Methylpyrrolidon (NMP) als Lösemittel Einzug gehalten, da es gegenüber Isocyanatgruppen unreaktiv ist und somit geeignet ist die Viskosität beim Prepolymeraufbau zu reduzieren. Darüber hinaus ist NMP in der Lage die vielfach in der PUD-Chemie verwendete Dimethylolpropionsäure zu lösen. Dadurch wird gewährleistet, dass ausreichend viele hydrophile Zentren in Form von Carboxylat-Gruppen in das Polyurethan-Gerüst eingebaut werden. Allerdings hat sich gezeigt, dass NMP als fruchtschädigende Substanz einzustufen ist und somit ein Ersatz für dieses Lösungsmittel notwendig wird.

Die US 2003/ 187136 werden Polyurethan-und Polyurethan- Polyacrylate- Hybridpolymer-Dispersionen offenbart. Auch hier werden Lösungsmittel mit einem Siedepunkt oberhalb von 100°C bei Normaldruck zur Herstellung der Polymeren verwendet.

In der DE-A 36 13 492 wird ein Verfahren zur colöserfreier Dispersionen nach dem sogenannten Acetonverfahren beschrieben. Hierbei wird eine 20 bis 50 %ige organische Lösung eines hydrophilen, bereits kettenverlängerten Polyurethans in z.B. Aceton hergestellt und anschließend durch Zugabe mit Wasser in eine Dispersion überführt. Nach der destillativen Entfernung des Acetons wird eine lösemittelfreie Dispersion erhalten. Diese Dispersionen weisen bevorzugt auch eine nichtionische Hydrophilierung auf und lassen sich bei Raumtemperatur zu harten, transparenten Filmen trocknen. Sollte eine Erniedrigung der Filmbildungstemperatur oder eine Verzögerung der Trocknung notwendig sein, so werden Coaleszenzlöser wie Diacetonalkohol, NMP, Ethylenglykolmonobutylether oder Diethylenglykolmonobutylether in Mengen < 5 Gew.% (bezogen auf Dispersion) mitverwendet (Spalte 11, Z.58 - 65). Nachteilig an diesen Systemen ist, dass die Produkte eine nicht ausreichende Wasser- und Ethanolbeständigkeit aufweisen und für ein ausreichendes Verarbeitungsfenster auf die Verwendung von Coaleszenzlösem angewiesen sind. Ebenfalls nachteilig an diesem Verfahren ist die vergleichsweise große Lösemittelmenge, die nach dem Dispergierschritt destillativ entfernt werden muss.

Die Aufgabe der vorliegenden Erfindung bestand in der Bereitstellung von ausschließlich ionisch hydrophilierten Polyurethan-Dispersionslacken, die lösemittel- und NMP-frei sind. Darüber hinaus sollten die erfindungsgemäßen Beschichtungsmittel über verbesserte Filmbildungseigenschaften verfügen und die daraus hergestellten Beschichtungen gute Beständigkeiten gegen Chemikalien und Wasser aufweisen, sowie Härten über 75 Pendelsekunden aufweisen.

Überraschenderweise konnte diese Aufgabe durch die Bereitstellung von hart eingestellten Polyurethan-Dispersionen, die mit einem niedrig siedenden Lösungsmittel, das nach Dispergierung destillativ entfernt wird, hergestellt werden und anschließend mit hochsiedenden (Siedepunkt > 150°C) ethylen- oder propylenglykolischen Ethern und gegebenenfalls Verdickern und/oder Verlaufshilfsmitteln und/oder Entschäumern und/oder weiteren Lackhilfsmitteln versetzt werden, gelöst werden. Diese lösemittelhaltigen Dispersionslacke verfilmen, insbesondere auf saugenden Untergründen besser als solche mit anderen Colösern, wie z.B. NMP, die in gleicher Menge verwendet werden. Die glykolischen Colöser enthaltenden Dispersionen weisen Mindestfilmbildungstemperaturen von weniger als 20°C auf und führen zu harten, besonders hochwertigen Beschichtungen mit sehr guter Filmoptik, die auch auf saugenden Untergründen wie Holz verarbeitet werden können.

Gegenstand der vorliegenden Erfindung ist somit ein Verfahren zur Herstellung wässriger Beschichtungsmittel, dadurch gekennzeichnet, dass

I) eine lösemittel- und NMP-freie Polyurethandispersion hergestellt wird, wobei Lösungsmittel frei bedeutet, dass die Dispersion ≤ 0,9 Gew.% Lösungsmittel aufweist und wobei

I.1) zunächst in einem ersten Schritt eine NCO-Präpolymer-Lösung in einer Konzentration von 66 bis 98 Gew.-% eines bei Normaldruck einen Siedepunkt unterhalb 100°C aufweisenden Lösemittels durch Umsetzung von:

a) einem oder mehreren Polyisocyanaten,
b) einem oder mehreren Polyolen mit mittleren Molgewichten $M_n$ von 500 bis 6000,
c) einem oder mehreren Polyolen mit mittleren Molgewichten $M_n$ von 62 bis 500,
d) einer oder mehrerer Verbindungen, die eine ionische Gruppe oder eine zur Ausbildung einer ionischen Gruppe befähigte Gruppe enthalten und das NCO-Präpolymer keine nicht ionischen Hydrophilierungsmittel enthält,

erhalten wird,

I.2) in einem zweiten Schritt das NCO-Präpolymer I.1) in Wasser dispergiert wird, wobei vor, während oder nach der Dispergierung eine zumindest teilweise Neutralisation der ionischen Gruppen erfolgt,

I.3) in einem dritten Schritt eine Kettenverlängerung mit

e) einem oder mehreren Polyaminen mit mittleren Molekulargewichten $M_n$ unter 500 erfolgt und

I.4) in einem vierten Schritt das Lösungsmittel vollständig destillativ entfernt wird und im Anschluss

II) 1 bis 7 Gew.-% eines OH-monofunktionellen ethylen- oder propylenglykolischen Ethers sowie

III) weitere Lackadditive

gemeinsam oder getrennt der Polyurethandispersion (I) zugesetzt werden.

Ebenfalls Gegenstand der vorliegenden Erfindung sind wässrige Beschichtungsmittel erhältlich nach dem erfindungsgemäßen Verfahren.

Bevorzugt enthält die erfindungsgemäße Polyurethan-Dispersion einen Hartsegmentgehalt (HS) zwischen 50 bis 85 Gew.-%, besonders bevorzugt zwischen 55 bis 75 Gew.-%., wobei die Isocyanatmenge bezogen auf die Feststoffmenge zwischen 35 und 55 Gew.-%, bevorzugt 39 und 50 Gew.-% beträgt. Die Säurezahl des Festharzes liegt zwischen 12 und 30 mg KOH/g Festharz, bevorzugt 15 und 28 mg KOH/g Festharz. Der Hartsegmentgehalt berechnet sich wie folgt:

$$ HS = \frac{100 * [(\text{Masse (a)} + \text{Masse (c)} + \text{Masse (d)} + \text{Masse (e)}]}{\sum \text{Masse (a, b, c, d, e)}} $$

Als Komponente a) sind die üblicherweise in der Polyurethanchemie eingesetzten Polyisocyanate geeignet, wie beispielsweise Diisocyanate der Formel $R^1(NCO)_2$, wobei $R^1$ für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele für bevorzugte Diisocyanate sind Tetramethylendiisocyanat, Hexamethylendiisocyanat, 4,4'-Diisocyanatodiphenylmethan, 2,4'-Diisocyanatodiphenylmethan, 2,4-Diisocyanatotoluol, 2,6-Diisocyanatotoluol oder $\alpha,\alpha,\alpha',\alpha'$-Tetramethyl-$m$- oder $p$-xylylendiisocyanat sowie Mischungen der genannten Diisocyanate. Besonders bevorzugte Diisocyanate sind 1-Isocyanato-3,3,5-trimethyl-5-isocyanatomethylcyclohexan (Isophorondiisocyanat) und 4,4'-Diisocyanatodicyclohexylmethan.

Optional können kleine Mengen z.B. drei- und/oder höherwertige Isocyanate eingesetzt werden, um somit einen gewissen Verzweigungs- oder Vernetzungsgrad des Polyurethans zu gewährleisten. Die Menge des einzusetzenden Polyisocyanats richtet sich nach seiner Funktionalität und ist so zu bemessen, dass das NCO-Prepolymer noch rührbar und dispergierbar bleibt. Derartige Isocyanate werden z.B. erhalten, indem zweiwertige Isocyanate derart miteinander umgesetzt werden, dass ein Teil ihrer Isocyanatgruppen zu Isocyanurat-, Biuret-, Allophanat-, Uretdion- oder Carbodiimidgruppen derivatisiert werden. Auch solche über ionische Gruppen hydrophilierte Polyisocyanate sind geeignet. Beispiele für solche Isocyanate sind in der EP-A 510 438 beschrieben, in welcher Polyisocyanate mit OH-funktionellen Carboxylverbindungen umgesetzt werden. Hydrophilierte Polyisocyanate werden weiterhin durch Umsetzung von Polyisocyanaten mit gegenüber Isocyanaten reaktiven Verbindungen, die schwefelsaure Gruppen tragen erhalten. Derartige Polyisocyanate können hohe Funktionalitäten, z.B. von mehr als 3 aufweisen.

Geeignete polymere Polyole b) weisen einen Molgewichtsbereich ($M_n$) von 500 bis 6000, bevorzugt von 500 bis 3000 und besonders bevorzugt von 650 bis 2500 auf. Die OH-Funktionalität beträgt mindestens 1,8 bis 3, bevorzugt 1,9 bis 2,2 und besonders bevorzugt 1,92 bis 2,0. Es handelt sich bei den Polyolen zum Beispiel um Polyester, Polyether auf Basis von Propylenoxid und/oder Tetrahydrofuran, Polycarbonate, Polyestercarbonate, Polyacetale, Polyolefine, Polyacrylate und Polysiloxane. Bevorzugt werden Polyester, Polyether, Polyestercarbonate und Polycarbonate eingesetzt. Besonders bevorzugt sind bifunktionelle Polyester, Polyether, Polyestercarbonate und Polycarbonate. Mischungen der beschriebenen polymeren Polyole b) sind ebenfalls geeignet.

Zusätzlich können in Abmischung mit den genannten Polyolen b) auch fettsäurehaltige Polyester b1) eingesetzt werden, die durch Ver- oder Umesterungsprodukt(e) von trocknenden und/oder nicht-trocknenden Fettsäuren bzw. Ölen mit mindestens bifunktionellen Polyolverbindungen erhalten werden, wie sie z.B. in der EP-A 0 017 199 (S. 10, Z. 27 bis S. 11, Z. 31) beschrieben sind. Als Polyolverbindungen werden bevorzugt tri- und tertafunktionelle Hydroxylkomponenten wie z.B. Trimethylolethan, Trimethlylolpropan, Glycerin oder Pentaerythritol verwendet.

Als Polyol b1) ebenfalls geeignet ist partiell dehydratisiertes Ricinusöl, das durch thermische Belastung von Ricinusöl unter saurer Katalyse erhalten wird und in der EP-A 0 709 414 (S. 2, Z. 37-40) beschrieben ist.

Ebenfalls als Polyole b1) geeignet sind solche, die in der DE-A 199 30 961 (S. 2, Z. 46 - 54; S. 2, Z. 67 bis S. 3, Z. 3) offenbart werden. Dort werden aliphatische und cycloaliphatische Monocarbonsäuren mit 8 bis 30 Kohlenstoffatomen wie z.B. Ölsäure, Laurinsäure, Linolsäure oder Linolensäure mit Ricinusöl in Gegenwart von Glycerin umgesetzt.

Weiterhin sind als Polyole b1) Umesterungsprodukte von Ricinusöl und einem anderen oder mehreren anderen Triglyceriden geeignet.

Besonders bevorzugt als Komponente b1) sind im statistischen Mittel bezüglich der OH-Gruppen bisfunktionelle, fettsäurehaltige Komponenten, die Glycerin- oder Trimethylolpropaneinheiten enthalten. Ganz besonders bevorzugt sind dabei Umesterungsprodukte mit mittleren OH-Funktionalitäten von 2 aus Ricinusöl mit einem weiteren, von Ricinusöl verschiedenen Öl. Die fettsäurehaltigen Polyester b1) werden bevorzugt mit Polyolen b), die ein $M_n$ von 650 bis 2500 g/mol und OH-Funktionalitäten von 1,92 bis 2 aufweisen, eingesetzt. Die fettsäurehaltigen Polyester b1) werden besonders bevorzugt mit Polyolen b), die ein $M_n$ von 650 bis 2500 g/mol, OH-Funktionalitäten von 1,92 bis 2 aufweisen und aus der Gruppe der Ester, Ether, Carbonate oder Carbonatester ausgewählt sind, eingesetzt.

Niedermolekulare Polyole c) mit einem Molekulargewichtsbereich ($M_n$) von 62 bis 500, bevorzugt 62 bis 400 und besonders bevorzugt 90 bis 300 sind die üblicherweise in der Polyurethanchemie eingesetzten bifunktionellen Alkohole, wie z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2-und 1,4-Cyclohexandiol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole sowie Mischungen dieser Produkte. Anteilig können auch monofunktionelle Alkohole mit 2 bis 22, bevorzugt 2 bis 18 Kohlenstoffatomen zugesetzt werden. Hier kommen beispielsweise Ethanol, 1-Propanol, 2-Propanol, primäres Butanol, sekundäres Butanol, n-Hexanol und dessen Isomere, 2-Ethylhexylalkohol, Ethylenglykolmonomethylether, Diethylenglykolmonomethylether, Ethylenglykolmonobutylether, Diethylenglykolmonobutylether, Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, 1-Octanol, 1-Dodecanol, 1-Hexadecanol, Laurylalkohol und Stearylalkohol in Frage.

Tri- und höherfunktionelle Alkohole des angegebenen Molekulargewichtsbereichs können anteilig in der Menge mitverwendet werden, dass die Polymerlösung rührbar bleibt.

Als Neutralisationskomponenten für die anionischen Dispersionen eigenen sich die dem Fachmann bekannten tertiären Amine, Ammoniak sowie Alkalihydroxide. Die kationischen Harze werden durch Protonierung oder Quartärnierung in die wasserlösliche Form gebracht.

Als Komponente d) sind niedermolekulare Verbindungen, die ionische Gruppen enthalten oder zur Ausbildung einer ionischen Gruppe befähigt sind, geeignet, wie z.B. Dimethylolpropionsäure, Dimethylolbuttersäure, Hydroxypivalinsäure, Umsetzungsprodukte von (Meth-) acrylsäure und Polyaminen (z.B. DE-A-19 750 186, S. 2, Z. 52 - 57) oder Sulfonatgruppen enthaltende Polyolkomponenten wie z.B. das propoxylierte Addukt von Natriumhydrogensulfit an 2-Butendiol oder die in der EP-A 0 364 331 (S. 6, Z. 1 - 6) beschriebenen, aus Salzen der Sulfoisophthalsäure aufgebauten Polyester. Weiterhin geeignet sind OH-funktionelle Verbindungen, die kationische Gruppen oder in kationische Gruppen überführbare Einheiten enthalten wie z.B. N-Methyldiethanolamin. Bevorzugt sind Carboxylsäuregruppen-haltige Komponenten. Besonders bevorzugt ist die Dimethylolpropionsäure.

Das NCO-Präpolymer enthält keine nichtionischen Hydrophilierungsmittel.

Als Kettenverlängerer e) kommen Aminopolyole oder Polyamine mit einem Molgewicht unter 500 in Frage, wie z.B. Hydrazin, Ethylendiamin, 1,4-Diaminobutan, Isophorondiamin, 4,4'-Diaminodicyclohexylmethan, Ethanolamin, Diethanolamin, Piperazin oder Diethylentriamin.

Neben dem Einsatz gegenüber Isocyanaten reaktiven polyfunktionellen Verbindungen, kann auch die Terminierung des Polyurethan-Präpolymers mit monofunktionellen Alkoholen oder Aminen in Betracht kommen, um somit das Molekulargewicht der Polyurethane zu regulieren. Bevorzugte Verbindungen sind aliphatische Monoalkohole oder Monoamine mit 1 bis 18 C-Atomen. Besonders bevorzugt werden Ethanol, n-Butanol, Ethylenglykol-monobutylether, 2-Ethylhexanol, 1-Octanol, 1-Dodecanol, 1-Hexadecanol oder N-dialkylamine eingesetzt.

Als Lösungsmittel zur Herstellung der Polyurethandispersion I) kommen solche in Frage, die bei Normaldruck unterhalb von 100°C sieden, keine gegenüber Isocyanaten reaktive Gruppen aufweisen und darüber hinaus wasserlöslich sind. Zudem muss das Lösungsmittel aus der hergestellten Dispersion destillativ entfernbar sein. Beispiele solcher Lösungsmittel sind Aceton, Methylethylketon, tert.-Butyl-methylether oder Tetrahydrofuran.

Die Herstellung der lösemittelfreien, wässrigen Polyurethandispersionen läuft in vier Schritten ab. Zunächst erfolgt die Herstellung des NCO-Präpolymers durch Umsetzung eines Überschusses der Komponente a) mit den Komponenten b), c) und d). Dabei sollte das NCO-Präpolymer eine NCO-Funktionalität von < 2,3 aufweisen. Das Lösungsmittel kann vor, während oder nach der Prepolymerisierung in der Menge zugesetzt werden, dass eine 66 bis 98 %ige Lösung, bevorzugt 75 bis 95 %ige Lösung entsteht. Ein zur Neutralisation der potentiell ionischen Gruppen notwendiges Neutralisationsmittel kann bereits zu Beginn der Reaktion anwesend sein, muss aber spätestens, sofern es nicht dem Dispergierwasser zugesetzt wird, dem fertigen Prepolymer hinzugefügt werden. Die Menge des Neutralisationsamins kann aber auch vor der Dispergierung zwischen organischer und wässriger Phase aufgeteilt werden. In einem zweiten Schritt erfolgt die Dispergierung, bei der entweder das Wasser dem Harz oder umgekehrt das Harz dem Wasser unter ausreichenden Scherbedingungen zugesetzt wird. Im dritten Schritt wird die Kettenverlängerung durchgeführt, wobei die Menge der stickstoffhaltigen, isocyanatreaktiven Komponenten e) so bemessen wird, dass 25 bis 105 %, bevorzugt 55 bis 100 %, besonders bevorzugt 60 bis 90 % der Isocyanatgruppen abreagieren können. Die verbleibenden Isocyanatgruppen reagieren unter Kettenverlängerung mit dem anwesenden Wasser. Die vollständige destillative Entfernung des Lösungsmittels erfolgt vorzugsweise im Vakuum und bildet den vierten Schritt.

"Lösungsmittelfrei" im Sinne der vorliegenden Anmeldung bedeutet, dass die Dispersion ≤ 0,9 Gew.-%, bevorzugt ≤ 0,5 Gew.%, besonders bevorzugt ≤ 0,3 Gew.-% Lösungsmittel aufweist.

Der Feststoffgehalt der lösemittelfreien Dispersion liegt zwischen 25 bis 65 Gew.-%. Bevorzugt ist ein Feststoffbereich von 30 bis 50 Gew.-%, besonders bevorzugt von 34 bis 45 Gew.-%.

Zur Herstellung des erfindungsgemäßen Beschichtungsmittels wird die lösemittelfreie Dispersion mit 1 bis 7 Gew.-%, bevorzugt 1 bis 5 Gew.-% (bezogen auf Dispersion aus I) eines OH-monofunktionellen ethylen- oder propylenglykolischen Ether II) oder einer Mischung solcher Ether II) versetzt. Beispiele für solche OH-monofunktionellen ethylen-oder propylenglykolischen Ether sind Ethylglykolmethylether, Ethylglykolethylether, Diethylglykolethylether, Diethylglykolmethylether, Triethylglykolmethylether, Butylglykol, Butyldiglykol, Propylenglykolmethylether, Dipropylenglykolmethylether, Tripropylenglykolmethylether, Propylenglykolbutylether, Propylenglykolmonopropylether, Dipropylenglykolmonopropylether, Propylenglykolphenylether und Ethylenglykolphenylether. Bevorzugt sind Ethylglykolmonomethylether, Butylglykol, Butyldiglykol, Propylenglykolmonomethylether und Propylenglykolmonobutylether.

Bevorzugt wird der Ether bzw. die Ethermischung, sofern die Komponenten wasserlöslich sind, als wässrige Lösung unter Rühren zugesetzt. In Wasser unlösliche Komponenten werden der Dispersion langsam unter Rühren zugesetzt. Anteilig können auch ethylen- oder propylenglykolische Ether eingesetzt werden, die keine OH Gruppen aufweisen, wie z.B. Ethylglykoldimethylether, Triethylglykoldimethylether, Diethylglykoldimethylether oder Proglyde® DMM (Dipropylenglykoldimethylether) der Fa. Dow Chemicals (Schwalbach, Deutschland).

Dem colöserhaltigen Beschichtungsmittel werden zum Abschluss noch Lackadditive (III) zugesetzt. Lackadditive sind z.B. Entschäumer, Entlüfter, Verdicker, Verlaufs- oder Oberflächenadditive.

Ein handelsüblicher Entschäumer wird bevorzugt zuerst unter Rühren zugesetzt. Hierfür kommen Mineralölentschäumer, Silikonentschäumer und auch polymere, silikonfreie Entschäumer sowie Polyethersiloxan-Copolymere in Frage.

Als Entlüfter kommen Polyacrylate, Dimethylpolysiloxane, organisch modifizierte Polysiloxane wie z.B. Polyoxyalkyldimethylsiloxane sowie Fluorsilicorie in Betracht.

Weiterhin werden Verdicker eingesetzt, die es ermöglichen, die Viskosität der erfindungsgemäßen Beschichtungsmittel entsprechend dem Applikationsverfahren einzustellen. Als Verdicker sind handelsübliche Verdicker geeignet, wie beispielsweise natürliche organische Verdicker, z.B. Dextrine oder Stärke, organisch abgewandelte Naturstoffe, z.B. Celluloseether oder Hydroxyethylcellulose, organisch vollsynthetische, z.B. Poly(meth)acrylverbindungen oder Polyurethane sowie anorganische Verdicker, z.B. Bentonite oder Kieselsäuren. Bevorzugt werden organisch vollsynthetische Verdicker eingesetzt. Besonders bevorzugt werden Acrylatverdicker verwendet, die vor der Zugabe gegebenenfalls weiter mit Wasser verdünnt werden.

Es können auch Verlaufs- oder Oberflächenadditive wie Silikonadditive, ionogene bzw. nichtionogene Acrylate oder grenzflächenaktive, niedermolekularere Polymere zugesetzt werden.

Untergrundbenetzende Silikontenside wie z.B. polyethermodifizierte Polydimethylsiloxane können ebenfalls zugegeben werden.

Die Zugabe der Komponenten II) und III) kann wie oben beschrieben bevorzugt zeitlich versetzt durchgeführt werden, sie können aber auch zeitgleich zugefügt werden, indem etwa die etherhaltigen Lösungsmittel und die Lackadditive gemeinsam oder aber eine Mischung aus etherhaltigen Lösungsmitteln und Lackadditiven der Polyurethandispersion I) zugesetzt werden. Auch die Mischung aus Additiven III) und etherhaltigen Lösungsmitteln II) können der Dispersion I) zugesetzt werden.

Die Lackherstellung erfolgt bei Temperaturen zwischen 5 und 50°C, bevorzugt 20 und 35°C.

Die erhaltenen erfindungsgemäßen Beschichtungsmittel können als physikalisch trocknendes Einkomponenten (1K)-System oder auch als Zweikomponenten (2K)-System appliziert werden.

Gegenstand der vorliegenden Erfindung ist somit auch die Verwendung der erfindungsgemäßen wässrigen Beschichtungsmittel als Bindemittel in Einkomponenten (1K)-Systemen oder als Bindemittel-Bestandteil in einem Zweikomponenten (2K)-System.

Bei den 2K-Systemen wird eine Aushärtung der erfindungsgemäßen Dispersionen bevorzugt mit den dem Fachmann bekannten hydrophilen und/oder hydrophoben Lackpolyisocyanaten durchgeführt. Bei Verwendung der Lackpolyisocyanate kann es notwendig werden, diese mit weiteren Colösermengen zu verdünnen, um eine gute Vermischung der Polyisocyanate mit der Dispersion zu erreichen. Als Lösungsmittel kommen hier gegenüber Isocyanatgruppen unreaktive Lösungsmittel wie z.B. Ethylglykoldimethylether, Triethylglykoldimethylether, Diethylglykoldimethylether, Proglyde® DMM (Dipropylenglykoldimethylether), Butylacetat, Methoxybutylacetat oder Dibasic Esters, wie sie von der Fa. DuPont angeboten werden in Frage.

Die erfindungsgemäßen Beschichtungsmittel können auf beliebige Substrate aufgebracht werden, z.B. Holz, Metall, Kunststoff, Papier, Leder, Textilien, Filz, Glas oder mineralische Untergründe sowie auch auf bereits beschichtete Untergründe. Eine besonders bevorzugte Anwendung ist die Verwendung der erfindungsgemäßen wässrigen Beschichtungsmitteln zur Herstellung von Beschichtungen auf saugenden Untergründen wie z.B. Holz oder offenporige, mineralischen Untergründe.

Die erfindungsgemäßen Beschichtungsmittel können als solche oder in Kombination mit weiteren aus der Lacktechnologie bekannten Hilfs- und Zusatzmitteln wie z.B. Füllstoffen und Pigmenten verwendet werden.

Der Auftrag der Beschichtungsmittel, enthaltend die erfindungsgemäße Polyurethandispersion, kann auf bekannte Weise, z.B. durch Streichen, Gießen, Rakeln, Spritzen, Sprühen, Schleudern, Walzen oder Tauchen erfolgen.

**Beispiele**

**Tabelle 1**: Eingesetzte Komponenten

| Handelsname | Bezeichnung | Hersteller |
|---|---|---|
| Desmodur® W | 4,4'-Diisocyanatodicyclohexylmethan | Bayer AG, Leverkusen, DE |
| Desmodur® I | Isophorondiisocyanat | Bayer AG, Leverkusen, DE |
| Bayhydur® VP LS 2236 | Hydrophiliertes Polyisocyanat; 16,2 Gew.-% NCO | Bayer AG, Leverkusen, DE |
| Proglyde® DMM | Dipropylenglykoldimethylether | Dow Chemicals, Schwalbach, DE |
| PolyTHF® | Polytetramethylenglykol, F = 2, MG ≈ 2000 g/mol | BASF AG, Ludwigshafen, DE |
| Byk® 381 | Verlaufshilfsmittel | Byk Chemie, Wesel, DE |
| Byk® 346 | Netzmittel | Byk Chemie, Wesel, DE |
| Byk® 028 | Entschäumer | Byk Chemie, Wesel, DE |
| Acrysol® RM8 | Verdicker, 5%ig in Wasser | Rohm&Haas, Frankfurt, DE |
| Dowanol® TPnB | Tripropylenglykolbuytlether | DOW Chemicals, Schwalbach, DE |
| Dowanol® PnB | ProPylenglykolbuytlether | DOW Chemicals, Schwalbach, DE |

**Polyester-Oligomer-Vorstufe**

In einem 5l-Reaktor mit Destillationsaufsatz wurden 3200 g Ricinusöl und 1600 g Sojaöl sowie 2,0 g Dibutylzinnoxid eingewogen. Ein Stickstoffstrom (5 l/h) wurde durch die Reaktanden geleitet. Innerhalb von 140 min. wurde auf 240°C aufgeheizt und nach 6 h bei 240°C abgekühlt. Die OH-Zahl betrug 108 mg KOH/ g, die Säurezahl 2,5 mg KOH/ g.

**Dispersion 1**

205,5 g eines Polyester (Adipinsäure, 1,6-Hexandiol; OH-Zahl 66 mg KOH/g), 19 g Dimethylolpropionsäure und 58,0 g 1,6-Hexandiol wurden bei 110°C im Vakuum entwässert. Dann wurde auf 55°C abgekühlt, nacheinander mit 124,2 g Aceton und 226,9 g Desmodur® I versetzt und unter Rückfluss gekocht, bis ein NCO Gehalt von 3,9 Gew.-% (theo.-NCO Gehalt 4,0 %) erreicht war. Es wurde erneut auf 55°C eingestellt und die klare Lösung wurde mit 12,9 g Triethylamin, das gut verrührt wurde, versetzt. Die gesamte neutralisierte Prepolymerlösung (55°C) wurde unter heftigem Rühren in 770 g Wasser, das bei einer Temperatur von 30°C vorlag, dispergiert. Nach Dispergierung wurde 5 Min.

nachgerührt, bevor innerhalb von 5 Min. eine Lösung aus 4,2 g Hydrazinhydrat und 9,2 g Ethylendiamin, gelöst in 90 g Wasser, zugegeben wurde. Im Anschluss daran wurde das Aceton bei 40°C im Vakuum (120 mbar) vollständig destillativ entfernt. Zur Reaktion der verbliebenen Isocyanatgruppen wurde bei 40°C gerührt, bis IR-spektroskopisch kein NCO mehr nachweisbar war. Nach Abkühlen auf 30°C wurde durch ein Seitz T5500-Filter filtriert.

**Kenndaten der Polyurethan-Dispersion:**

| | |
|---|---|
| Mittlere Teilchengröße : | 60 nm (Laserkorrelationsspektroskopie, LKS) |
| pH (20°C) (10 %ige wässrige Lsg.): | 7,8 |
| Festgehalt: | 35,0 % |
| Hartsegmentgehalt: | 61 % |
| Säurezahl (bezogen auf Festharz): | 15,5 mg KOH/g |

**Dispersion 2**

Eine Mischung aus 181,0 g PolyTHF® 2000, 140,3 g der Polyester-Oligomer-Vorstufe, 37,2 g Dimethylolpropionsäure und 18,3 g 1,6-Hexandiol wurden bei 55°C mit 98,9 g Aceton und 19,6 g Triethylamin versetzt und vermischt. 275,4 g Desmodur® W wurden zugesetzt und die Reaktionsmischung wurde solange am Rückfluss gekocht, bis ein NCO-Gehalt von 4,3 % erreicht war. 500 g des Prepolymers wurden unter heftigem Rühren in 720 g Wasser, das bei einer Temperatur von 30°C vorgelegt war, dispergiert. Nach 5 Min. wurde innerhalb von 5 Min. eine Lösung von 4,2 g Hydrazinhydrat und 6,2 g Ethylendiamin in 73 g Wasser zugegeben. Zur vollständigen Umsetzung der Isocyanatgruppen wurde bei 45°C gerührt, bis IR-spektroskopisch kein NCO mehr nachweisbar war. Nach Abkühlen erfolgte die Filtration durch ein Seitz T5500-Filter.

**Kenndaten der Polyurethan-Dispersion:**

| | |
|---|---|
| Mittlere Teilchengröße (LKS): | 55 nm |
| pH (20°C) (10%ige wässrige Lsg.): | 8,4 |
| Festgehalt: | 35,0 % |
| Hartsegmentgehalt: | 52 % |
| Säurezahl (bezogen auf Festharz): | 23,3 mg KOH/g |

**Vergleichsdispersion 3 (NMP-haltig)**

300,7 g eines Polyester (Adipinsäure, 1,6-Hexandiol; OH-Zahl 66 mg KOH/g), 27,8 g Dimethylolpropionsäure und 84,8 g 1,6-Hexandiol wurden bei 110°C im Vakuum entwässert. Dann wurde auf 90°C abgekühlt und durch Zugabe von 181,7 g NMP* eine klare Lösung erhalten, zu der 70°C 332,1 g Desmodur® I gegeben wurden. Bei 90°C wurde bis zu einem NCO-Gehalt von 3,8 Gew.-% (theo. NCO-Gehalt 4,0 Gew.-%) gerührt. Anschließend wurde bei 70°C 21,0 g Triethylamin addiert und für 10 Min. verrührt. 700 g der neutralisierten Lösung wurden unter heftigem Rühren in 810 g Wasser, das bei einer Temperatur von 30°C vorlag, dispergiert. Nach Dispergierung wurde 5 Min. nachgerührt, bevor innerhalb von 5 Min. eine Lösung aus 4,2 g Hydrazinhydrat und 9,2 g Ethylendiamin gelöst in 90 g Wasser zugegeben wurde. Zur Abreaktion der Isocyanatgruppen wurde bei 40°C gerührt, bis IR-spektroskopisch kein NCO mehr nachweisbar war. Nach Abkühlen auf 30°C wurde durch ein Seitz T5500-Filter filtriert.

**Kenndaten der Polyurethan-Dispersion:**

| | |
|---|---|
| Mittlere Teilchengröße (LKS): | 60 nm |
| pH (20°C) (10%ige wässrige Lsg.): | 7,8 |
| Festgehalt: | 35,0 % |

(fortgesetzt)

| | |
|---|---|
| Colösergehalt* | 8,3 % |

\* Versucht man die NMP Menge zu reduzieren, so dass sich eine Dispersion mit einem Colösergehalt von 5% ergibt, so entsteht eine hochviskose Harzschmelze, die nicht mehr vollständig dispergiert werden kann.

**Vergleichsbeispiel 4 (NMP-haltig)**

339 g PolyTHF® 2000, 248 g der Polyester-Oligomer-Vorstufe, 70 g Dimethylolpropionsäure, 34 g 1,6-Hexandiol und 186 g N-Methylpyrrolidon wurden auf 70°C aufgeheizt und gerührt, bis eine klare Lösung entstanden war. Anschließend wurden 516 g Desmodur® W zugegeben und auf 100°C aufgeheizt. Bei dieser Temperatur wurde gerührt, bis der NCO-Gehalt 4,6 % betrug und dann auf 70°C abgekühlt. Bei dieser Temperatur wurde 39 g Triethylamin zugegeben. 500 g dieser Lösung wurden unter heftigem Rühren in 640 g Wasser, das bei einer Temperatur von 30°C vorgelegt war, dispergiert. Nach Dispergierung wurde 5 Min nachgerührt bevor innerhalb von 5 Min. eine Lösung von 4,1 g Hydrazinhydrat und 10,2 g Ethylendiamin in 100 g Wasser zugegeben wurden. Zur vollständigen Abreaktion der Isocyanatgruppen wurde bei 45°C gerührt, bis IR-spektroskopisch kein NCO mehr nachweisbar war. Nach Abkühlen auf 30°C wurde durch ein Seitz T5500-Filter filtriert.

**Kenndaten der Polyurethan-Dispersion:**

| | |
|---|---|
| Mittlere Teilchengröße (LKS): | 45 nm |
| pH (20°C) (10%ige wässrige Lsg.): | 8,2 |
| Festgehalt: | 35,0 % |
| Colösergehalt | 5,1 % |

**Vergleichsbeispiel 5**

500,0 g eines Polyesters aus Adipinsäure sowie 1,6-Hexandiol und Neopentylglykol (im Molverhältnis 0,65 : 0,35) der OH Zahl 66 und 59,0 g eines zweiten Polyesters aus Adipinsäure sowie 1,6-Hexandiol der OH Zahl 133 wurden mit 31,5 g 1,4-Butandiol, 43 g eines Polyethers aus einem Gemisch aus 84% Ethylenoxid und 16% Propylenoxid, gestartet auf n-Butanol (OH-Zahl 26), 40,2 g Dimethylolpropionsäure und 13,4 g Trimethylolpropan vermischt und bei 70°C mit 488,0 g Desmodur® I solange umgesetzt, bis der NCO-Gehalt des NCO-Prepolymeren 7,3 % erreicht hatte. Das entstandene Prepolymer wurde in 2420 g Aceton gelöst und bei 30°C mit 30,3 g Triethylamin versetzt. Der Prepolymerlösung wurde anschließend eine wässrige Lösung aus 24 g Ethylendiamin, 10,3 g Diethylentriamin und 310 g Wasser innerhalb von 5 Minuten zugesetzt. Nachdem 15 Minuten nachgerührt wurde, wurde 2110 g Wasser unter intensivem Rühren zugegeben. Aus der entstandenen Dispersion wurde das Aceton unter vermindertem Druck entfernt.

**Kenndaten der Polyurethan-Dispersion:**

| | |
|---|---|
| Mittlere Teilchengröße : | 115 nm |
| pH (20°C) (10%ige wässrige Lsg.): | 7,4 |
| Festgehalt: | 35,0 % |

**Verfilmungseigenschaften der Dispersionen**

Die colöserfreie Dispersion 2 wurde aufgeteilt und mit unterschiedlichen Colöser/Wassergemischen oder, sofern der Colöser nicht mit Wasser mischbar war, direkt mit einem Colöser (diese sind in Tab. 2 mit \* gekennzeichnet) verdünnt. Die erhaltenen, colöserhaltigen Dispersionen wurden mit einem Rakel in einer Nassfilmschichtdicke von 210 μm auf eine Glasplatte aufgetragen. Nach Trocknung bei 20°C der Filme erfolgte die Beurteilung (Tabelle 2).

Als Vergleich wurde die Vergleichsdispersion 4 (5,1 % Colösergehalt) ohne weitere Zugaben mit gleicher Schichtdicke aufgetragen. Nach Trocknung ergab sich ein glatter, transparenter und rissfreier Film

**Tabelle 2:** Aus colöserfreier Dispersion 2 durch Zusatz unterschiedlicher Colöser/Colösermengen erhaltene Filme. Es wurden 2% (auf Dispersion) einer 5%igen Lösung Acrysol® RM 8 als Verdicker zugesetzt.

| Colöser | 3% Colöser auf Dispersion | 5% Colöser auf Dispersion |
|---|---|---|
| **Butylglykol** | Glatt, rissfrei | Glatt, rissfrei |
| **Butyldiglykol** | Glatt, rissfrei | Glatt, rissfrei |
| **Tripropylenglykol** | Glatt, rissfrei | Glatt, rissfrei |
| **Dowanol® TPnB** | Glatt, rissfrei | Glatt, rissfrei |
| **Dowanol® PnB** | Glatt, rissfrei | Glatt, rissfrei |
| **N-Methylpyrrolidon** | Viele, lange Risse | Wenige, lange Risse am Rand |

Es wurden Verfilmungseigenschaften sowie Härten unterschiedlicher Dispersionen mit verschiedenen Colöser (n)gehalten untersucht (s. Tab. 3 und 4). Es wurden 2% (auf Dispersion) einer 5%igen Lösung Acrysol® RM 8 als Verdicker zugesetzt. Ethanol- und Wasserbeständigkeit wurde an auf Holz aufgezogenen Filmen durchgeführt. Die Beschichtungen wurden zuvor einen Tag bei Raumtemperatur getrocknet. Ethanolfestigkeit wurde durch fünfminütiges Auflegen eines mit Ethanol getränkten Wattebausches auf der Beschichtung bestimmt. Der Wattebausch wurde mit einem kleinen Becherglas abgedeckt. Mit Wasser als Testsubstanz wurde analog verfahren, allerdings wurde die Belastung für 24 h auf der Beschichtung belassen.

**Beurteilung der Beständigkeiten:**

1 = schlecht, Beschichtung zerstört
5 = sehr gut, Beschichtung unverändert

**Tabelle 3:** Verfilmungseigenschaften und Härten

|  | Bsp.1 | Bsp.1 | Bsp. 2 | Vergleichsbsp.5 |
|---|---|---|---|---|
| Dispersion [g] | 100 | 100 | 89,3 | 100 |
| Byk® 346 / Byk® 381 [g] | 0,2/0,5 | 0,2/0,5 | 0,18/0,45 | 0,2/0,5 |
| Colöser | Butylglykol | Butylglykol | Butylglykol | Butylglykol |
| Colösergehalt [%] bezogen auf das Gewicht der Dispersion | 3,7 | 4,8 | 4,0 | 3,7 |
| Applikationstemp. | 20°C | 4°C | 20°C | 20°C |
| Optik auf rohem Holz | Sehr gut | Sehr gut | Sehr gut | Sehr gut |
| Optik auf Glas | Sehr gut | Sehr gut | Sehr gut | Sehr gut |
| Pendelhärte König nach 2d/RT, 210 $\mu$m Nass | 115 sec. | 112 sec. | 87 sec. | 102 sec |
| Ethanolbeständigkeit | 3 | 3 | 3-4 | 1 |
| Wasserfestigkeit | 4-5 | 4-5 | 5 | 1 |

**Tabelle 4:** Vergleich von 2K-Systemen, die mit NMP bzw. Butyldiglykol verdünnt wurden

| Dispersion | Bsp.1 | Bsp.1 | Bsp. 2 | Bsp. 2 |
|---|---|---|---|---|
| Dispersionsmenge | 76,8 g | 76,8 g | 75,3 g | 75,3 g |

(fortgesetzt)

| Dispersion | Bsp.1 | Bsp.1 | Bsp. 2 | Bsp. 2 |
|---|---|---|---|---|
| Bayhydur® VP LS 2336 65% in Proglyde® DMM | 9,0 g | 9,0 g | 9,0 g | 9,0 g |
| NMP/Wasser | | 1,7 g/ 8,3 g | | 1,7 g/8,3 g |
| Butyldiglykol/Wasser | 1,7 g/ 8,3 g | | 1,7 g/8,3 g | |
| Byk® 028 | 1,0 | 1,0 | 1,0 | 1,0 |
| Byk® 346 | 0,2 | 0,2 | 0,2 | 0,2 |
| Byk® 381 | 0,5 | 0,5 | 0,5 | 0,5 |
| Acrysol® RM8/Wasser | 1g/1g | 1g/1g | 1g/1g | 1g/1g |
| Colösergehalt [%] | 4,9 | 4,9 | 4,9 | 4,9 |
| Applikationstemp. | 4°C | 4°C | 4°C | 4°C |
| Optik auf rohem Holz | Sehr gut | Gut | Sehr gut | Wenige Risse |
| Optik auf Glas | Sehr gut | Sehr gut | Sehr gut | Sehr gut |

**Patentansprüche**

1. Verfahren zur Herstellung wässriger Beschichtungsmittel, **dadurch gekennzeichnet, dass**

    I) eine lösemittel- und NMP-freie Polyurethandispersion hergestellt wird, wobei lösungsmittelfrei bedeutet, dass die Dispersion ≤ 0,9 Gew.-% Lösungsmittel aufweist und wobei

    I.1) zunächst in einem ersten Schritt eine NCO-Präpolymer-Lösung in einer Konzentration von 66 bis 98 Gew.-% eines bei Normaldruck einen Siedepunkt unterhalb 100°C aufweisenden Lösemittels durch Umsetzung von:

      a) einem oder mehreren Polyisocyanaten,
      b) einem oder mehreren Polyolen mit mittleren Molgewichten $M_n$ von 500 bis 6000,
      c) einem oder mehreren Polyolen mit mittleren Molgewichten $M_n$ von 62 bis 500,
      d) einer oder mehrerer Verbindungen, die eine ionische Gruppe oder eine zur Ausbildung einer ionischen Gruppe befähigte Gruppe enthalten und das NCO-Präpolymer keine nichtionischen Hydrophilierungsmittel enthält,

    erhalten wird,
    I.2) in einem zweiten Schritt das NCO-Präpolymer I.1) in Wasser dispergiert wird, wobei vor, während oder nach der Dispergierung eine zumindest teilweise Neutralisation der ionischen Gruppen erfolgt,
    I.3) in einem dritten Schritt eine Kettenverlängerung mit

      e) einem oder mehreren Polyaminen mit mittleren Molekulargewichten $M_n$ unter 500 erfolgt und

    I.4) in einem vierten Schritt das Lösungsmittel vollständig destillativ entfernt wird und im Anschluss

    II) 1 bis 7 Gew.-% eines <u>OH-monofunktionellen</u> ethylen- oder propylenglykolischen Ethers sowie
    III) weitere Lackadditive

  gemeinsam oder getrennt der Polyurethandispersion (I) zugesetzt werden.

2. Wässriges Beschichtungsmittel erhältlich gemäß Anspruch 1.

3. Wässriges Beschichtungsmittel gemäß Anspruch 2, **dadurch gekennzeichnet, dass** die Polyurethan-Dispersion einen Hartsegmentgehalt (HS) zwischen 50 bis 85 Gew.-% aufweist, wobei die Isocyanatmenge bezogen auf die Feststoffmenge zwischen 35 und 55 Gew.-% beträgt.

**4.** Wässriges Beschichtungsmittel gemäß Anspruch 2, **dadurch gekennzeichnet, dass** die Säurezahl des Festharzes zwischen 12 und 30 mg KOH/g Festharz liegt.

**5.** Wässriges Beschichtungsmittel gemäß Anspruch 2, **dadurch gekennzeichnet, dass** Polyole b) in Kombination mit fettsäurehaltigem Polyester b1) eingesetzt werden.

**6.** Wässriges Beschichtungsmittel gemäß Anspruch 5, **dadurch gekennzeichnet, dass** die Komponenten b1) im statistischen Mittel bezüglich der OH-Gruppen bisfunktionelle, fettsäurehaltige Komponenten, die Glycerin- oder Trimethylolpropaneinheiten enthalten, sind.

**7.** Wässriges Beschichtungsmittel gemäß Anspruch 5, **dadurch gekennzeichnet, dass** die Komponenten b1) Umesterungsprodukte, mit mittleren OH-Funktionalitäten von 2, aus Ricinusöl mit einem weiteren, von Ricinusöl verschiedenen Öl sind.

**8.** Wässriges Beschichtungsmittel gemäß Anspruch 5, **dadurch gekennzeichnet, dass** Polyole ein $M_n$ von 650 bis 2500 g/mol, OH-Funktionalitäten von 1,92 bis 2 aufweisen und aus der Gruppe der Ester, Ether, Carbonate oder Carbonatester ausgewählt sind.

**9.** Wässriges Beschichtungsmittel gemäß Anspruch 2, **dadurch gekennzeichnet, dass** Komponente II) Ethylglykolmonomethylether, Ethylglykolmonobutylether, Butyldiglykol, Propylenglykolmonomethylether oder Propylenglykolmonobutylether sind.

**10.** Verwendung der wässrigen Beschichtungsmittel gemäß Anspruch 2 als Bindemittel in Einkomponenten(1K)-Systemen.

**11.** Verwendung der wässrigen Beschichtungsmittel gemäß Anspruch 2 als Bindemittel-Bestandteil in einem Zweikomponenten(2K)-System.

**12.** Verwendung der wässrigen Beschichtungsmittel gemäß Anspruch 2 zur Herstellung von Beschichtungen auf saugenden Untergründen.

**13.** Verwendung gemäß Anspruch 12, **dadurch gekennzeichnet, dass** saugende Untergründe Holz oder offenporige, mineralischen Untergründe sind.

**Claims**

**1.** A process for the preparation of aqueous coating compositions, **characterised in that**

I) a solvent-free and NMP-free polyurethane dispersion is prepared, wherein solvent-free means that the dispersion contains $\leq 0.9$ wt.% solvent and wherein

I.1) initially in a first step an NCO prepolymer solution is obtained in a concentration of 66 to 98 wt.% of a solvent having a boiling point of less than 100°C at standard pressure, by reaction of:

a) one or more polyisocyanates,
b) one or more polyols having average molecular weights $M_n$ of 500 to 6000,
c) one or more polyols having average molecular weights $M_n$ of 62 to 500,
d) one or more compounds which contain an ionic group or a group capable of forming an ionic group,
and the NCO prepolymer does not contain any non-ionic hydrophilising agents,

I.2) in a second step the NCO prepolymer I.1) is dispersed in water, whereby, before, during or after the dispersing, at least partial neutralisation of the ionic groups takes place,
I.3) in a third step, a chain extension with

e) one or more polyamines having average molecular weights $M_n$ of less than 500 takes place and

I.4) in a fourth step, the solvent is completely removed by distillation, and subsequently

II) 1 to 7 wt.% of an <u>OH-monofunctional</u> ethylene or propylene glycol ether and

III) other coating additives

are added together or separately to the polyurethane dispersion (I).

2. An aqueous coating composition obtainable according to claim 1.

3. The aqueous coating composition according to claim 2, **characterised in that** the polyurethane dispersion has a hard segment content (HS) of between 50 and 85 wt.%, wherein the amount of isocyanate based on the amount of solids is between 35 and 55 wt.%.

4. The aqueous coating composition according to claim 2, **characterised in that** the acid number of the solid resin is between 12 and 30 mg KOH/g solid resin.

5. The aqueous coating composition according to claim 2, **characterised in that** polyols b) are used in combination with fatty-acid-containing polyester b1).

6. The aqueous coating composition according to claim 5, **characterised in that** the components b1) are, on statistical average, bifunctional in terms of the OH groups, fatty-acid-containing components, which contain glycerol or trimethylolpropane units.

7. The aqueous coating composition according to claim 5, **characterised in that** the components b1) are transesterification products, having average OH functionalities of 2, of castor oil with a further oil other than castor oil.

8. The aqueous coating composition according to claim 5, **characterised in that** polyols have an $M_n$ of 650 to 2500 g/mol, OH functionalities of 1.92 to 2 and are selected from the group consisting of esters, ethers, carbonates or carbonate esters.

9. The aqueous coating composition according to claim 2, **characterised in that** component II) are ethyl glycol monomethyl ether, ethyl glycol monobutyl ether, butyl diglycol, propylene glycol monomethyl ether or propylene glycol monobutyl ether.

10. Use of the aqueous coating compositions according to claim 2 as binders in one-pack (1K) systems.

11. Use of the aqueous coating compositions according to claim 2 as binder component in a two-pack (2K) system.

12. Use of the aqueous coating compositions according to claim 2 for the production of coatings on absorbent substrates.

13. Use according to claim 12, **characterised in that** absorbent substrates are wood or open-pored mineral substrates.

**Revendications**

1. Procédé pour la préparation d'agents de revêtement aqueux **caractérisé en ce que**

I) on prépare une dispersion de polyuréthane exempte de solvant et de NMP, exempt de solvant indiquant que la dispersion présente ≤ 0,9 % en poids de solvant et

I.1) dans lequel on obtient dans une première étape une solution de NCO-prépolymère dans une concentration de 66 à 98 % en poids d'un solvant présentant un point d'ébullition inférieur à 100°C à pression atmosphérique par réaction :

a) d'un ou plusieurs polyisocyanates,
b) d'un ou plusieurs polyols avec des poids moléculaires moyens $M_n$ de 500 à 6 000,
c) d'un ou plusieurs polyols avec des poids moléculaires moyens $M_n$ de 62 à 500,
d) d'un ou plusieurs composés, qui contiennent un groupe ionique ou un groupe capable de former un groupe ionique et le NCO-prépolymère ne contient pas d'agent hydrophilisant non ionique,

I.2) on disperse dans une seconde étape le NCO-prépolymère I.1) dans de l'eau, une neutralisation au moins partielle des groupes ioniques ayant lieu avant, pendant ou après la dispersion,

I.3) on réalise dans une troisième étape un allongement de chaîne avec

  e) une ou plusieurs polyamines avec des poids moléculaires moyens $M_n$ inférieurs à 500 et

I.4) on élimine complètement par distillation dans une quatrième étape le solvant et ensuite

on ajoute ensemble ou séparément à la dispersion de polyuréthane I)
II) de 1 à 7 % en poids d'un éther éthylène- ou propylèneglycolique OH-monofonctionnel ainsi que
III) d'autres additifs de laques.

2. Agent de revêtement aqueux obtenu selon la revendication 1.

3. Agent de revêtement aqueux selon la revendication 2, **caractérisé en ce que** la dispersion de polyuréthane présente une teneur en segment dur (HS) de 50 à 85 % en poids, la quantité d'isocyanate rapportée à la quantité de matière solide étant de 35 à 55 % en poids.

4. Agent de revêtement aqueux selon la revendication 2, **caractérisé en ce que** l'indice acide de la résine solide est de 12 à 30 mg de KOH/g de résine solide.

5. Agent de revêtement aqueux selon la revendication 2, **caractérisé en ce que** l'on utilise des polyols b) en combinaison avec un polyester contenant un acide gras b1).

6. Agent de revêtement aqueux selon la revendication 5, **caractérisé en ce que** les constituants b1) sont des constituants contenant des acides gras bifonctionnels en moyenne statistique par rapport aux groupes OH, qui contiennent des unités glycérine ou triméthylolpropane.

7. Agent de revêtement aqueux selon la revendication 5, **caractérisé en ce que** des constituants b1) sont des produits d'estérification avec des fonctionnalités OH moyennes de 2, constitués d'huile de ricin avec une autre huile différente de l'huile de ricin.

8. Agent de revêtement aqueux selon la revendication 5, **caractérisé en ce que** les polyols présentent un $M_n$ de 650 à 2 500 g/mol, des fonctionnalités OH de 1,92 à 2 et sont choisis parmi des esters, des éthers, des carbonates et des esters de carbonate.

9. Agent de revêtement aqueux selon la revendication 2, **caractérisé en ce que** les constituants II) sont le monométhyléther d'éthylglycol, le monobutyléther d'éthylglycol, le butyldiglycol, le monométhyléther de propylèneglycol ou le monobutyléther de propylèneglycol.

10. Utilisation des agents de revêtement aqueux selon la revendication 2 comme liant dans des systèmes monoconstituants (1K).

11. Utilisation des agents de revêtement aqueux selon la revendication 2 comme constituant de liant dans un système biconstituant (2K).

12. Utilisation des agents de revêtement aqueux selon la revendication 2 pour la préparation de revêtements sur des bases absorbantes.

13. Utilisation selon la revendication 12, **caractérisée en ce que** les bases absorbantes sont du bois ou des bases minérales à pores ouverts.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003187136 A
- DE 3613492 A
- EP 510438 A
- EP 0017199 A
- EP 0709414 A
- DE 19930961 A
- DE 19750186 A
- EP 0364331 A